Europäisches Patentamt

European Patent Office

Office européen des brevets

(19)

(11) **EP 0 935 404 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.⁷: **H05B 39/04**

(21) Anmeldenummer: **99100633.9**

(22) Anmeldetag: **14.01.1999**

(54) **Schaltung zur Stabilisierung der Spannung an einer Lampe, insbesondere für Scheinwerferlampen eines Kraftfahrzeuges**

Circuit for stabilizing a lamp voltage, in particular for motor vehicle headlamps

Circuit pour la stabilisation de la tension dans une lampe, en particulier pour projecteurs d'un véhicule à moteur

(84) Benannte Vertragsstaaten:
**DE FR GB IT**

(30) Priorität: **05.02.1998 DE 19804539**

(43) Veröffentlichungstag der Anmeldung:
**11.08.1999 Patentblatt 1999/32**

(73) Patentinhaber: **Automotive Lighting Reutlingen GmbH**
**72762 Reutlingen (DE)**

(72) Erfinder:
• **Drews, Ulrich**
**71701 Schwieberdingen (DE)**

• **Kienzler, Thomas**
**72762 Reutlingen (DE)**
• **Froehlich, Thomas**
**72764 Reutlingen (DE)**

(74) Vertreter: **Dreiss, Fuhlendorf, Steimle & Becker Patentanwälte**
**Postfach 10 37 62**
**70032 Stuttgart (DE)**

(56) Entgegenhaltungen:
| DE-A1- 3 800 950 | DE-A1- 19 630 644 |
| FR-A1- 2 712 747 | US-A- 4 841 198 |

**Beschreibung**

Stand der Technik

Die Erfindung betrifft eine Schaltung zur Stabilisierung der Spannung an einer mittels Lichtschalter ein- und ausschaltbaren Lampe, die von einer schwankenden Versorgungsspannung gespeist wird, insbesondere für Scheinwerferlampen eines Kraftfahrzeuges. US 4 841 198 offenbart eine Schaltung zur Stabilisierung der Versorgungsspannung einer Lampe mittels pulsweiten Modulation.

Gerade bei Kraftfahrzeugen hat die Versorgungsspannung aus dem Bordnetz teilweise erhöhte Spannungswerte gegenüber der Nenn-Brennspannung der Lampen. Zur Regelung der Spannung an der Lampe wären grundsätzlich elektronische Spannungsregler, wie Linearregler, geeignet. Diese aber scheiden aufgrund der erzeugten Verlustleistung für diesen Einsatz aus. Zudem enthalten geschaltete Step-Down-Regler oft großvolumige Induktivitäten.

Es ist Aufgabe der Erfindung, eine Schaltung der eingangs erwähnten Art zu schaffen, die einfach und raumsparend im Aufbau ist und keine nennenswerte Verlustleistung erzeugt.

Diese Aufgabe wird nach den Merkmalen des Anspruchs 1.

Die Ansteuerschaltung mit der Referenzschaltung und der Zeitschalter können mit elektronischen Bauelementen in raumsparender Bauweise realisiert werden. Der Zeitschalter wird abhängig vom Verhältnis Nenn-Brennspannung zu Versorgungsspannung im Dauer- oder Tastbetrieb so gesteuert, daß die Spannung an der Lampe konstant der Nenn-Brennspannung entspricht. Auf diese Weise wird auf einfache Art erreicht, daß die Lampe nicht außerhalb der Spezifikation betrieben wird. Da der Zeitschalter vorzugsweise mit einem elektronischen Bauteil, wie Feldeffekt- oder Bipolartransistor, realisiert werden kann, ergeben sich steile Schaltflanken, was sich in kleiner Verlustleistung auswirkt.

Darüberhinaus wird eine erhöhte Temperatur im Bereich der Lampe vermieden, die zu Schäden an den die Lampe aufnehmenden und umgebenden Teilen führen könnte. Ist die Lampe als Scheinwerferlampe in einem Kraftfahrzeug verwendet, dann läßt sich bei erhöhter Versorgungsspannung eine Blendung des Gegenverkehrs vermeiden. Durch die konstant auf dem Nennwert gehaltene mittlere Brennspannung wird zudem die Lebensdauer der Lampe verlängert.

Beim Tastbetrieb wird eine erkennbare Helligkeitsschwankung der Lampe dadurch verhindert, daß die die Periodendauer bestimmende Frequenz des Steuersignals der Ansteuerschaltung größer als 100 Hz gewählt ist. Dabei wird nach einer Ausgestaltung die Frequenz des Steuersignals vorzugsweise mit 500 Hz gewählt. Die thermische Trägheit der Lampe undrückt das Auftreten von Helligkeitsschwankungen zusätzlich.

Die Ansteuerung des Zeitschalters ist nach einer Ausgestaltung so ausgeführt, daß der Ansteuerschaltung eine Referenzschaltung zugeordnet ist, die ein der Nenn-Brennspannung entsprechendes Referenzsignal abgibt, daß der Ansteuerschaltung der Spannungsabfall an der Lampe zugeführt ist und daß die Ansteuerschaltung in Abhängigkeit des Referenzsignals und des Spannungsabfalls ein die Einschaltdauer veränderndes Steuersignal an den Zeitschalter weiterleitet. Für das Steuersignal bedeutet dies, daß die Referenzschaltung an die Ansteuerschaltung ein Dauereinschaltsignal abgibt, wenn die anliegende Versorgungsspannung kleiner ist als die vorgegebene Nenn-Brennspannung und daß die Ansteuerschaltung mit zunehmender Versorgungsspannung die Einschaltdauer des Zeitschalters so verkürzt, daß der Mittelwert der Leistung an der Lampe konstant bleibt und der Nenn-Brennspannung der Lampe entspricht.

Der Lampenstromkreis kann als Reihenschaltung so aufgebaut sein, daß der Zeitschalter im Lampenstromkreis der Lampe vorgeschaltet ist oder daß der Zeitschalter im Lampenstromkreis der Lampe nachgeschaltet ist.

Ist darüberhinaus vorgesehen, daß dem Lampenstromkreis ein Kondensator parallelgeschaltet ist, dann können Stromspitzen beim Einschalten des Lampenstromkreises und Rückwirkungen auf die Versorgungsspannung vermieden werden. Dies wirkt sich auf die Bordnetzwelligkeit bei einem Kraftfahrzeug und die Aussendung von Funkstörungen günstig aus, da diese zwangsläufig verringert werden.

Der Lichtschalter ist in der Regel so einbezogen, daß der Lichtschalter dem Lampenstromkreis aus Lampe und Zeitschalter vorgeschaltet ist und die Versorgungsspannung an den Lampenstromkreis anschaltet.

Ist dagegen vorgesehen, daß die Versorgungsspannung dauernd an dem Lampenstromkreis aus Lampe und Zeitschalter angeschaltet ist und daß der Lichtschalter die Ansteuerschaltung mit der Referenzschaltung aktiviert, dann hat selbst ein Massekurzschluß an der Lampe keinen negativen Einfluß auf die Ansteuerung.

Über einen Lampenkontrollausgang der Ansteuerschaltung kann auf an sich bekannte Weise ein den Schaltzustand der Lampe anzeigendes Signal abgegriffen werden.

Die Erfindung wird anhand von in den Zeichnungen dargestellten Ausführungsbeispielen näher erläutert. Es zeigen jeweils als Blockschaltbild:

Fig. 1    eine Schaltung mit der Lampe vorgeschalteter Reihenschaltung aus Zeitschalter und Lichtschalter,

Fig. 2    eine Schaltung mit der Lampe vorgeschaltetem Lichtschalter und nachgeschaltetem Zeitschalter,

Fig. 3    eine Schaltung mit der Lampe vorgeschaltetem Zeitschalter, bei der der Lichtschalter die Referenzschaltung und die Ansteuerschaltung aktiviert und

Fig. 4    eine Schaltung mit der Lampe nachgeschaltetem Zeitschalter, bei der der Lichtschalter die Referenzschaltung und die Ansteuerschaltung aktiviert.

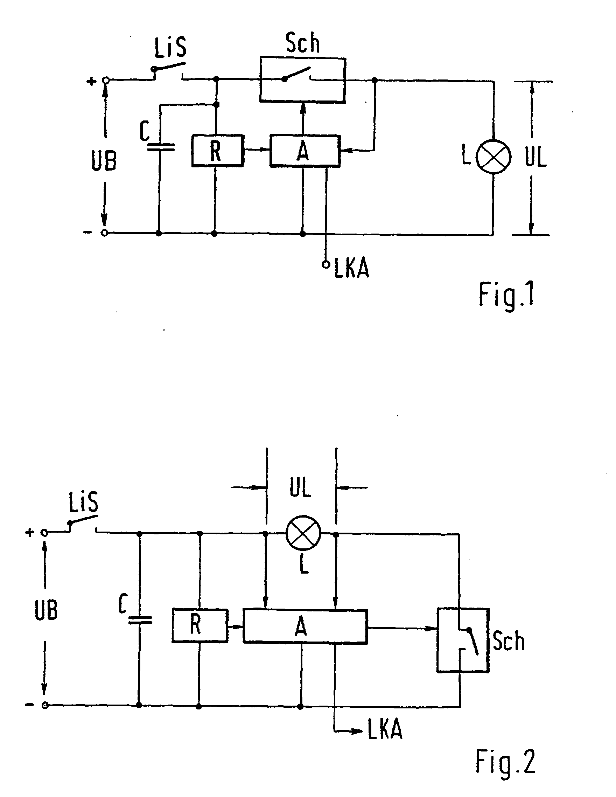

Wie Fig. 1 zeigt, besteht der Lampenstromkreis-aus einer Reihenschaltung eines Lichtschalters LiS, eines Zeitschalters Sch und der Lampe L, die von der Versorgungsspannung UB, z.B. dem Bordnetz eines Kraftfahrzeuges, gespeist wird. Eine dem Lampenstromkreis parallelgeschaltete Referenzschaltung R vergleicht in Verbindung mit einer Ansteuerschaltung A die anstehende Versorgungsspannung UB mit der fest vorgegebenen Nenn-Brennspannung UL der Lampe L.

Ist die Versorgungsspannung UB kleiner als die Nenn-Brennspannung UL, dann wird über die Ansteuerschaltung A der Zeitschalter auf Dauerbetrieb, d.h. Dauerschaltstellung, gesteuert. Die Spannung an der Lampe L entspricht praktisch der Versorgungsspannung UB, da der Spannungsabfall an dem durchgeschalteten, als elektronischer Schalter ausgebildeten Zeitschalter Sch vernachlässigt werden kann.

Übersteigt die Versorgungsspannung UB die Nenn-Brennspannung UL, dann gibt die Referenzschaltung R ein entsprechend der Abweichung bemessenes Steuersignal an die Ansteuerschaltung A, die den Zeitschalter Sch im Taktbetrieb steuert. Der Taktbetrieb erfolgt dabei mit einer Frequenz größer als 100 Hz, z.B. 500 Hz, um keine erkennbaren Helligkeitsschwankungen an der Lampe L erkennen zu können. Die Periodendauer T wird im Taktbetrieb mit einer Einschaltdauer te belegt, die vom Verhältnis Nenn-Brennspannung UL zur Versorgungsspannung UB wie folgt abhängt:

$$\left(\frac{UL}{UB}\right)^2 = \frac{te}{T}$$

Beträgt die Nenn-Brennspannung z.B. 12,8 V und die Versorgungsspannung UB = 14,2 V, dann ergibt sich für

$$te = \left(\frac{12,8}{14,2}\right)^2 T = 0,81 * T$$

Der Zeitschalter Sch ist in diesem Fall während der Periodendauer T zu 81 % geschlossen und zu 19 % offen. Damit wird bei sich verändernder Versorgungsspannung UB > UL stets erreicht, daß mit entsprechender Veränderung der Einschaltdauer te die Leistung an der Lampe L auf einem dem Wert der Nenn-Brennspannung UL entsprechenden Wert konstant gehalten wird.

Bei dem Ausführungsbeispiel nach Fig. 2 ist nur der Lichtschalter LiS der Lampe L vorgeschaltet, während der Zeitschalter Sch der Lampe L im Lampenstromkreis nachgeschaltet ist. Die Schaltung arbeitet jedoch in derselben Art wie die Schaltung nach Fig. 1. Es wird erreicht, daß ein Massekurzschluß an der Lampe L, z.B. beim Service, keinen negativen Einfluß auf die Ansteuerschaltung A und Referenzschaltung R hat.

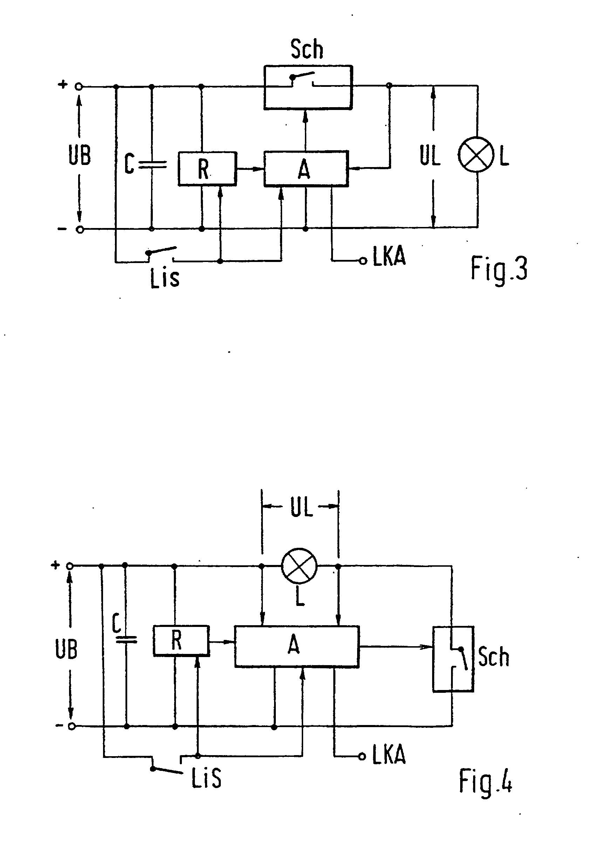

Wie die Fig. 3 zeigt, kann die Schaltung nach Fig. 1 so abgewandelt werden, daß der Lichtschalter LiS nicht mehr in den Lampenstromkreis einbezogen ist und nur noch die Referenzschaltung R und die Ansteuerschaltung A aktiviert. Würde bei der Schaltung nach Fig. 1 der Lichtschalter durch einen Leistungsschalter unterstützt, dann kann dieser bei der Schaltung nach Fig. 3 eingespart werden, da der Lichtschalter LiS direkt die Referenzschaltung R und die Ansteuerschaltung A aktivieren kann. Die Schaltfunktionen des Zeitschalters Sch bleiben bei dieser Schaltung unverändert.

In Fig. 4 wird bei gleichbleibender Funktion der Schaltung die Referenzschaltung R und die Ansteuerschaltung A ebenfalls direkt durch den Lichtschalter LiS aktiviert. Der Lichtschalter LiS ist gegenüber der Schaltung nach Fig. 2 wieder nicht mehr im Lampenstromkreis angeordnet. Die Aktivierung der Referenzschaltung R und der Ansteuerschaltung A erfolgt durch Anschaltung des +- Potentials der Versorgungsspannung UB, wie bei der Schaltung nach Fig. 3, wodurch diese Schaltungen ihre Vergleichs- und Steuerfunktionen ausüben können.

An den Ansteuerschaltungen A aller Schaltungen nach Fig. 1 bis 4 kann an einem Lampenkontrollausgang LKA der Schaltzustand der Lampe L in bestimmter Weise abgeleitet werden.

Da in der Einschaltphase der Widerstand des Glühfadens der Lampe L klein ist, besteht die Gefahr des Auftretens von Stromspitzen, die zu Überlastungen führen können, sieht die Erfindung zudem vor, daß die Lampe in der Einschaltphase über die Ansteuerschaltung im Soft-Start auf die Nennleistung bringbar ist. Der Soft-Start kann solange gewählt werden, daß der Glühfaden der Lampe L erwärmt ist und durch den der Nennleistung entsprechenden Widerstand aufweist.

**Patentansprüche**

1. Schaltung zur Stabilisierung der Spannung an einer mittels Lichtschalter (LiS) ein- und ausschaltbaren Lampe, die von einer schwankenden Versorgungsspannung gespeist wird, insbesondere für Scheinwerferlampen eines Kraftfahrzeugs, wobei in den Lampenstromkreis ein zusätzlicher, mittels einer Ansteuerschaltung (A) steuerbarer Zeitschalter (Sch) einbezogen ist, **dadurch gekennzeichnet, dass** bei einer Versorgungsspannung (UB) kleiner als die vorgegebene Nenn-Brennspannung (UL) der Lampe (L) die Ansteuerschaltung (A) den Zeitschalter (Sch) dauernd eingeschaltet hält, und dass bei einer Versorgungsspannung (UB) größer als die Nenn-Brennspannung (UL) der Lampe (L) die Ansteuerschaltung (A) den Zeitschalter (Sch) periodisch ein- und ausschaltet, wobei das Verhältnis von Einschaltdauer (te) zu Periodendauer (T) gleich dem Quadrat des Verhältnisses von Nenn-Brennspannung (UL) zu anstehender Versorgungsspannung (UB) ist, wobei der Ansteuerschaltung (A) eine Referenzschaltung (R) zugeordnet ist, die ein der Nenn-Brennspannung (UL) entsprechendes Referenzsignal abgibt, wobei der Ansteuerschaltung (A) ein Spannungsabfall an der Lampe (L) zugeführt ist und wobei die Ansteuerschaltung (A) in Abhängigkeit des Referenzsignals und des Spannungsabfalls ein die Einschaltdauer (te) veränderndes Steuersignal an den Zeitschalter (Sch) weiterleitet.

2. Schaltung nach Anspruch 1, **dadurch gekennzeichnet, dass** die die Periodendauer (T) bestimmende Frequenz des Steuersignals der Ansteuerschaltung (A) größer als 100 Hz gewählt ist.

3. Schaltung nach Anspruch 2, **dadurch gekennzeichnet, dass** die Frequenz des Steuersignals 500 Hz beträgt.

4. Schaltung nach einem der Ansprüche 1 bis 3, **dadurch gekennzeichnet, dass** die Referenzschaltung (R) an die Ansteuerschaltung (A) ein Dauereinschaltsignal abgibt, wenn die anliegende Versorgungsspannung (UB) kleiner ist als die vorgegebene Nenn-Brennspannung (UL).

5. Schaltung nach einem der Ansprüche 1 bis 4, **dadurch gekennzeichnet, dass** die Ansteuerschaltung (A) mit zunehmender Versorgungsspannung (UB) die Einschaltdauer (te) des Zeitschalters (Sch) so verkürzt, dass der Mittelwert der Leistung an der Lampe (L) konstant bleibt und der Nenn-Brennspannung der Lampe (L) entspricht.

6. Schaltung nach einem der Ansprüche 1 bis 5, **dadurch gekennzeichnet, dass** der Zeitschalter (Sch) im Lampenstromkreis der Lampe (L) vorgeschaltet ist.

7. Schaltung nach einem der Ansprüche 1 bis 6, **dadurch gekennzeichnet, dass** der Zeitschalter (Sch) im Lampenstromkreis (L) nachgeschaltet ist.

8. Schaltung nach einem der Ansprüche 1 bis 7, **dadurch gekennzeichnet, dass** dem Lampenstromkreis ein Kondensator (C) parallelgeschaltet ist.

9. Schaltung nach einem der Ansprüche 1 bis 8, **dadurch gekennzeichnet, dass** der Lichtschalter (LiS) den Lampenstromkreis aus Lampe (L) und Zeitschalter (Sch) vorgeschaltet ist und die Versorgungsspannung (UB) an den Lampenstromkreis anschaltet.

10. Schaltung nach einem der Ansprüche 1 bis 8, **dadurch gekennzeichnet, dass** die Versorgungsspannung (UB) dauernd an dem Lampenstromkreis aus Lampe (L) und Zeitschalter (Sch) angeschaltet ist und dass der Lichtschalter (LiS) die Ansteuerschaltung (A) mit der Referenzschaltung aktiviert.

**11.** Schaltung nach einem der Ansprüche 1 bis 10, **dadurch gekennzeichnet, dass** der Zeitschalter (Sch) als elektronischer Schalter, wie Feldeffekt- oder Bipolartransistor, ausgebildet ist.

**12.** Schaltung nach einem der Ansprüche 1 bis 11, **dadurch gekennzeichnet, dass** die Ansteuerschaltung (A) mit einem Lampenkontrollausgang (LKA) versehen ist.

**13.** Schaltung nach einem der Ansprüche 1 bis 12, **dadurch gekennzeichnet, dass** die Lampe (L) in der Einschaltphase über die Ansteuerschaltung (A) im Soft-Start auf die Nennleistung bringbar ist.

**Claims**

**1.** Circuit for stabilising voltage to a lamp which can be switched on and off by means of a light switch (LiS) and which is supplied from a fluctuating supply voltage, in particular for vehicle headlamps, whereby an additional time switch (Sch) that can be controlled by means of a trigger circuit (A) is incorporated in the lamp circuit loop, **characterised in that** the trigger circuit (A) continuously keeps the time switch (Sch) turned on when the supply voltage (UB) is smaller than the specified rated burning voltage (UL) of the lamp, and that the trigger circuit (A) periodically switches on and off the time switch (Sch) when the supply voltage (UB) is greater than the rated burning voltage (UL) of the lamp (L), whereby the ratio of on-time duty (te) to cycle duration (T) equals the square of the ratio of rated burning voltage (UL) to the supply voltage (UB) at hand, whereby a reference circuit (R) is allocated to the trigger circuit (A) which releases a reference signal corresponding to the rated burning voltage (UL), whereby the trigger circuit (A) experiences a voltage drop in the supply to the lamp (L), and whereby the trigger circuit (A) transmits the control signal that alters the duty ratio (te) to the time switch (Sch) in dependence on the reference signal and the voltage drop.

**2.** Circuit according to claim 1, **characterised in that** the control signal frequency of the trigger circuit (A), which determines the cycle duration (T), is selected to be greater than 100 Hz.

**3.** Circuit according to claim 2, **characterised in that** the control signal frequency amounts to 500 Hz.

**4.** Circuit according to any one of claims 1 to 3, **characterised in that** the reference circuit (R) sends an on-time switching signal to the trigger circuit (A), if the supply voltage (UB) at hand is smaller than the specified rated burning voltage (UL).

**5.** Circuit according to one of claims 1 to 4, **characterised in that** with increasing supply voltage (UB), the trigger circuit (A) shortens the duty ratio (te) of the time switch (Sch) so that the mean value of power output to the lamp (L) remains constant and corresponds to the rated burning voltage of the lamp (L).

**6.** Circuit according to one of claims 1 to 5, **characterised in that** the time switch (Sch) is connected in series to the lamp circuit loop (L).

**7.** Circuit according to claims 1 to 6, **characterised in that** the time switch (Sch) is connected on the output side of the lamp circuit loop (L).

**8.** Circuit according to any one of claims 1 to 7, **characterised in that** a capacitor (C) is connected in parallel with the lamp circuit loop.

**9.** Circuit according to any one of claims 1 to 8, **characterised in that** the light switch (LiS) is connected in series with the lamp circuit loop consisting of the lamp (L) and time switch (Sch) and switches on the supply voltage (UB) to the lamp circuit loop.

**10.** Circuit according to any one of claims 1 to 8, **characterised in that** the supply voltage (UB) is continuously connected to the lamp circuit loop consisting of the lamp (L) and time switch (Sch) and that the light switch (LiS) activates the trigger circuit (A) with the reference circuit.

**11.** Circuit according to any one of claims 1 to 10, **characterised in that** the time switch (Sch) is designed as an electronic switch such as a field effect transistor or bipolar transistor.

**12.** Circuit according to claims 1 to 11, **characterised in that** the trigger circuit (A) is provided with a signal lamp output (LKA).

**13.** Circuit according to any one of claims 1 to 12, **characterised in that** the lamp (L) can be brought up to the rated power output via the trigger circuit (A) in a soft start during the start-up phase.


**Revendications**

**1.** Circuit pour la stabiliser de la tension dans une lampe à brancher et débrancher au moyen d'un interrupteur (LiS), laquelle est alimentée par une tension d'alimentation variable, en particulier pour des lampes de projecteurs d'un véhicule automobile, un temporisateur (Sch) supplémentaire, destiné à être commandé par un circuit de commande (A), étant intégré dans le circuit électrique de la lampe, **caractérisé en ce que**, en présence d'une tension d'alimentation (UB) inférieure à la tension d'éclairage nominale (UL) prédéfinie de la lampe (L), le temporisateur (Sch) est maintenu en permanence en position branchée par le circuit de commande (A), et **en ce que**, en présence d'une tension d'alimentation (UB) supérieure à la tension d'éclairage nominale (UL) de la lampe (L), le temporisateur (Sch) est branché et débranché périodiquement par le circuit de commande (A), le rapport entre la durée de mise en circuit (te) et la durée de la période (T) est égal au carré du rapport entre la tension d'éclairage nominale (UL) et la tension d'alimentation (UB) appliquée, un circuit de référence (R) étant affecté au circuit de commande (A), lequel émet un signal de référence correspondant à la tension d'éclairage nominale (UL), une chute de tension dans la lampe (L) étant transmise vers le circuit de commande (A) et, en fonction du signal de référence et de la chute de tension, le circuit de commande (A) transmet vers le temporisateur (Sch) un signal de commande faisant varier la durée de mise en circuit (te).

**2.** Circuit selon la revendication 1, **caractérisé en ce que** la fréquence, déterminant la durée de la période (T), du signal de commande émis par le circuit de commande (A) est choisie supérieure à 100 Hz.

**3.** Circuit selon la revendication 2, **caractérisé en ce que** la fréquence du signal de commande est égale à 500 Hz.

**4.** Circuit selon l'une quelconque des revendications 1 à 3, **caractérisé en ce que** le circuit de référence (R) émet vers le circuit de commande (A) un signal de branchement permanent lorsque la tension d'alimentation (UB) appliquée est inférieure à la tension d'éclairage nominale (UL) prédéfinie.

**5.** Circuit selon l'une quelconque des revendications 1 à 4, **caractérisé en ce que**, lorsque la tension d'alimentation (UB) augmente, le circuit de commande (A) réduit la durée de mise en circuit (te) du temporisateur (Sch) de telle sorte que la valeur moyenne de la puissance dans la lampe (L) reste constante et correspond à la tension d'éclairage nominale de la lampe (L).

**6.** Circuit selon l'une quelconque des revendications 1 à 5, **caractérisé en ce que** le temporisateur (Sch) est monté en amont de la lampe (L) dans le circuit électrique de la lampe.

**7.** Circuit selon l'une quelconque des revendications 1 à 6, **caractérisé en ce que** le temporisateur (Sch) est monté en aval de la lampe (L) dans le circuit électrique de la lampe.

**8.** Circuit selon l'une quelconque des revendications 1 à 7, **caractérisé en ce qu'**un condenseur (C) est monté en parallèle au circuit électrique de la lampe.

**9.** Circuit selon l'une quelconque des revendications 1 à 8, **caractérisé en ce que** l'interrupteur (LiS) est monté en amont du circuit électrique de la lampe, formé par la lampe (L) et le temporisateur (Sch), et connecte la tension d'alimentation (UB) au circuit électrique de la lampe.

**10.** Circuit selon l'une quelconque des revendications 1 à 8, **caractérisé en ce que** la tension d'alimentation (UB) est connectée en permanence au circuit électrique de la lampe, formé par la lampe (L) et le temporisateur (Sch), et **en ce que** l'interrupteur (LiS) active le circuit de commande (A) avec le circuit de référence.

**11.** Circuit selon l'une quelconque des revendications 1 à 10, **caractérisé en ce que** le temporisateur (Sch) est conçu sous forme de commutateur électronique, tel qu'un transistor à effet de champ ou un transistor bipolaire.

**12.** Circuit selon l'une quelconque des revendications 1 à 11, **caractérisé en ce que** le circuit de commande (A) est muni d'une sortie de contrôle des lampes (LKA).

**13.** Circuit selon l'une quelconque des revendications 1 à 12, **caractérisé en ce que** la lampe (L) dans la phase de branchement peut être amenée à la puissance nominale par l'intermédiaire du circuit de commande (A) en mode de départ soft.

Fig.1

Fig.2

Fig.3

Fig.4